# EUROPÄISCHE PATENTSCHRIFT

(11) **EP 2 846 128 B1**
(45) Veröffentlichungstag und Bekanntmachung des Hinweises auf die Patenterteilung: **09.03.2016**
(21) Anmeldenummer: 14181750.2
(22) Anmeldetag: 21.08.2014
(51) Int. Cl.: G01B 7/02, G01B 7/06

(54) **Aktiver RFID-Fahrhöhensensor für luftgefederte Fahrwerksysteme**
Active RFID height sensor for pneumaticaly suspended chassis systems
Capteur d'hauteur RFID actif pour systèmes de châssis à suspension pneumatique

(30) Priorität: 09.09.2013 DE 102013217958
(43) Veröffentlichungstag der Anmeldung: 11.03.2015
(73) Patentinhaber: Brehmer GmbH & Co. KG Fahrzeug- und Industriemechatronik, 51674 Wiehl (DE)
(72) Erfinder: Brehmer, Thomas, 51674 Wiehl (DE); Uhl, Joachim, 51588 Nümbrecht (DE)
(74) Vertreter: Lippert, Stachow & Partner

(56) Entgegenhaltungen:
- WO-A2-2009/138687
- DE-A1- 3 423 602
- DE-A1-102010 060 293

## Beschreibung

Die Erfindung betrifft einen Fahrhöhensensor zur Erfassung eines Abstandes im Bereich zwischen einer Achse und einem Aufbau eines Fahrzeuges, insbesondere eines Nutzfahrzeuges.

Zur Erhöhung des Fahrkomforts bei Kraftfahrzeugen werden immer häufiger hydraulische, hydropneumatische oder pneumatische Aggregate wie Schwingungsdämpfer, Federbeine oder Luftfedern zwischen einer Achse und einem Aufbau des Fahrzeuges angeordnet. Zur beladungs- und/oder fahrlastabhängigen Steuerung derartiger Aggregate werden in der Regel Ausgangssignale eines Fahrhöhensensors verwendet. Damit ist beispielsweise die Beibehaltung einer vorgegebenen Fahrhöhe des Fahrzeuges unabhängig von der Beladung und/oder den Fahrbedingungen durch Vorsehen eines entsprechenden Niveau-Regelsystems steuerbar. Bekannt sind beispielsweise Fahrhöhensensoren, bei welchen eine am Aufbau des Fahrzeuges oder aufbauseitig im Inneren eines Luftfederbalges angebrachte Sendeeinrichtung eine elektromagnetische Welle oder eine Ultraschallwelle absendet. Die Ultraschallwelle wird durch eine entsprechend aufgebaute Reflektoreinrichtung, die an einer Achse oder achsseitig im Inneren eines Luftfederbalges des Fahrzeuges angebracht sein kann, reflektiert und auf eine in der Nähe der Sendeeinrichtung angebrachte Empfängereinrichtung geworfen. Durch die Bestimmung einer Laufzeit des Sendeimpulses vom Sender bis zum passiven Reflektor und zurück zum Sender/Empfänger (Transceiver) oder durch die Auswertung der zurück reflektierten Schalldruckamplitude sind Abstandsinformationen ermittelbar, welche zur Steuerung des Niveau-Regelsystems einsetzbar sind.

Bei der Verwendung von elektromagnetischen Wellen in einem anderen herkömmlichen Fahrhöhensensor wird eine von einer ersten Sendereinrichtung ausgesendete erste, propagierende elektromagnetische Welle von einer ersten Empfangseinheit, die an einer Achse des Fahrzeuges oder achsseitig im Inneren eines Luftfederbalges angebracht sein kann, empfangen und von einer zweiten Sendeeinrichtung in der Nähe der ersten Empfangseinrichtung entsprechend zum Beispiel dem Abstand zwischen dem ersten Sender und der ersten Empfangseinrichtung in einem ihrer Parameter verändert (z.B. moduliert) an eine zweite Empfangseinrichtung in der Nähe der ersten Sendeeinrichtung zurückgesendet. Hier wird die modulierte, zweite elektromagnetische Welle ausgewertet, die daraus ermittelten Abstandsinformationen sind zur Steuerung eines Niveau-Regelsystems einsetzbar.

Derartige herkömmliche Sensorsysteme sind mit Nachteilen behaftet. Im Falle des Ultraschallprinzips liegen diese insbesondere darin begründet, dass die reflektierte Ultraschallwelle nur sehr kleine Signalstärke aufweist und zudem durch Reflektion an den Wänden eines Luftfederbalges oder andere Umgebungsfaktoren beeinflusst wird.

Auch die Signalstärke propagierender elektromagnetischer Wellen ist sehr abhängig von Umgebungsbedingungen wie Luftfeuchtigkeit und Umgebungstemperatur, sodass auch das Prinzip der Aussendung einer elektromagnetischen Welle nicht störungsfrei arbeitet.

Weiterhin sind Fahrhöhensensoren bekannt, bei denen eine Auswerteinheit ein stationäres Magnetfeld aufbaut, welches einen passiven Transponder im zu messenden Abstand von einer Auswerteinheit mit Betriebsenergie versorgt. Dabei antwortet der Transponder im Wege der Lastmodulation, aus deren Signalamplitude wird innerhalb der Auswerteinheit die Abstandsinformation zwischen Auswerteinheit und Transponder berechnet und der Steuerung eines Niveau-Regelsystems zur Verfügung gestellt. Diese Systeme beziehen ihre Abstandsinformation aus extrem kleinen Antwortsignalen des Transponders im Mikrovolt-Bereich, daher ist der Schaltungsaufwand sehr hoch und das Messergebnis zudem störanfällig.

Die WO 2009/138687 A2 betrifft eine Vorrichtung sowie ein diesbezügliches Verfahren zur Detektion einer Abstandsveränderung in Bezug auf ein rotierendes Objekt um eine Achse, umfassend ein Terminal an einer festen Position zur Achse, wobei das Terminal ein Hochfrequenzfeld aussendet an einen mit dem Objekt verbundenen Resonanzkreis, wobei am Terminal ein Kopplungswert zwischen dem Schwingkreis am Terminal und dem Resonanzkreis am Objekt gemessen wird. Die DE 10 2010 060 293 A1 betrifft eine Ultraschall-Niveauregelvorrichtung mit einem Ultraschallsensor, einem Mikro-Controller und einem Reflektor, wobei der Ultraschallsensor und der vom Ultraschallsensor beabstandete Reflektor innerhalb eines elastischen Schutzbalges angeordnet sind. Die DE 3423602 A1 betrifft eine Messvorrichtung zur Ermittlung des Abstandes zwischen der Karosserie und der Achse eines Fahrzeuges unter Verwendung eines als Sender/Empfänger ausgebildeten Abstandsmesssystems, wobei der Sender/Empfänger an der Karosserie und der Reflektor an der Achse des Fahrzeuges befestigt ist.

Der Erfindung liegt die Aufgabe zugrunde, herkömmliche Fahrhöhensensoren zur Erfassung eines Abstandes im Bereich zwischen einer Achse und einem Aufbau eines Fahrzeuges so weiterzubilden, dass sie eine stabile und präzise Abstandsmessung in Fahrwerksystemen ermöglichen. Diese Aufgabe wird überraschenderweise schon mit einem Fahrhöhensensor mit den Merkmalen von Anspruch 1 gelöst.

Bei dem erfindungsgemäßen Fahrhöhensensor wird an der Magnetfeldabtasteinrichtung eine im Vergleich zu herkömmlichen Sensoren hohe Sensoramplitude erzeugt, da die Feldabschwächung allein durch die einfache Beabstandung von Magnetfelderzeugungseinrichtung und Magnetfeldabtasteinrichtung verursacht wird im Unterschied zu herkömmlichen Sensoren, bei welchen die doppelte Strecke erfasst werden muss. Somit kann mit dem erfindungsgemäßen Sensor ein verbessertes Signalrauschverhältnis bereitgestellt werden. Information über das erfasste Magnetfeld, beispielsweise eine Magnetfeldstärke, welche Rückschlüsse auf die Entfernung zwischen Magnetfelderzeugungseinrichtung und Magnetfeldtasteinrichtung erlaubt, kann zwischen der Targetstation und der Basisstation mittels einer einfachen Funkverbindung, insbesondere eine Funksignalübermittlung mit digitaler Datenübertragung durchgeführt werden, sodass eine Verschlechterung des Signals bei der Übertragung von der Targetstation an die Basisstation im Wesentlichen bzw. vollständig vermieden werden kann. Auch die Nachteile, die mit einer propagierenden elektromagnetischen Welle bzw. einer passiven Targetstation bei der Durchführung einer Abstandsmessung eines Fahrhöhensensors verbunden sind, können mit der Erfindung vermieden werden. Der erfindungsgemäß ausgebildete Fahrhöhensensor erlaubt gegenüber herkömmlichen Fahrhöhensensoren eine bislang unerreichte Genauigkeit und Betriebszuverlässigkeit.

Sowohl die Steuereinrichtung der Basisstation als auch die Steuereinrichtung der Targetstation können als Mikrocontroller ausgebildet sein.

Weitere erfindungsgemäße Merkmale sind in den Unteransprüchen sowie der allgemeinen und der speziellen Beschreibung angegeben.

Ein vergleichsweise einfacher Aufbau des erfindungsgemäßen Fahrhöhensensors kann dadurch erreicht werden, dass die Magnetfelderzeugungseinrichtung der Basisstation als Wechselstrom-gespeiste Sendespuleneinrichtung, insbesondere als LF-Sendespuleneinrichtung wie sie bei RFID-Tags im Langwellenbereich von beispielsweise 125 kHz - 134 kHz verwendet wird, realisiert wird. Die Magnetfeldabtasteinrichtung der Targetstation kann entsprechend als Receiverspuleneinrichtung, insbesondere als LF-Receiverspuleneinrichtung wie sie im RFID-Bereich im Langwellenbereich von beispielsweise 125 kHz - 134 kHz eingesetzt wird, sehr einfach aufgebaut sein.

Dabei kann die Abschwächung der Magnetfeldstärke aufgrund der Beabstandung der Sendespuleneinrichtung und der Receiverspuleneinrichtung als Maß für deren Entfernung zueinander und damit des Abstandes im Bereich zwischen einer Achse und einem Aufbau des jeweiligen Fahrzeuges verwendet werden.

Zur Verminderung der Kosten für den Aufbau des erfindungsgemäßen Fahrhöhensensors kann auch in Bezug auf den Aufbau der Funkübertragungsstrecke zwischen Basisstation und Targetstation auf Technologien zurückgegriffen werden, wie sie im Bereich der RFID-Technologie üblich sind. Beispielsweise kann die Transmittereinrichtung der Targetstation als Radio- oder Mikrowellen-Transmittereinrichtung mit ausgangsseitig angeschlossener Sendeantenne und die Receivereinrichtung der Basisstation als Radio- oder Mikrowellen-Receivereinrichtung mit eingangsseitig angeschlossener Empfangsantenne ausgebildet sein. Ohne hierauf beschränkt zu sein, liegen typische Frequenzen für die Kurzwelle bei 13,56 MHz, für UHF bei 865 MHz - 869 MHz bzw. für SHF bei 2,45 GHz und 5,8 GHz.

In einer besonderen Ausführungsform der Erfindung wird die Abschwächung des von der Magnetfelderzeugungseinrichtung einer Basisstation aufgebauten Magnetfeldes nicht als Maß für den gesuchten Abstand herangezogen, stattdessen dient der Zeitpunkt des von der Magnetfeldabtasteinrichtung erfasste Magnetfeldsignal als Zeitmarke für eine Laufzeitmessung eines Ultraschallsignals. Hierzu weist die Basisstation einen Ultraschallsender zur Abgabe eines Ultraschallsignals und die Targetstation einen zugeordneten Ultraschallsensor zur Erfassung eines, von dem Ultraschallsensor der Basisstation gesendeten Ultraschallsignals auf. Dabei sind die Magnetfelderzeugungseinrichtung und der Ultraschallsender zum zeitlich aufeinander abgestimmten Erzeugen eines Magnetfeldes und eines Ultraschallsignals ansteuerbar, beispielsweise durch die Steuereinrichtung der Basisstation, insbesondere derartig, dass beide Signale gleichzeitig von der Basisstation abgegeben werden. Zur Ermittlung der Laufzeit des Ultraschallssignals kann die Targetstation einen Zähler aufweisen, welcher nach dem Erfassen des Magnetfeldsignals gestartet und nach dem Erfassen des Ultraschallsignals gestoppt wird, sodass sich bei gleichzeitiger Erzeugung des Magnetfeldsignals und des Ultraschallsignals in der Basisstation mit der Laufzeit des Zählers und Kenntnis der Ausbreitungsgeschwindigkeit des Ultraschalls direkt der gesuchte Abstand ermitteln lässt. Bei den hier in Rede stehenden Abstandsmessungen kann die "Laufzeit" des Magnetfeldsignals, d.h. die Aufbauzeit des quasi-stationären Magnetfeldes gegenüber der Laufzeit des Ultraschallsignals vollständig vernachlässigt werden. Bei dieser Ausführungsform kann nach der Ermittlung einer Information über das Zeitmaß für den zeitversetzten Empfang des Ultraschallsignals durch den Ultraschallempfänger und des Magnetfeldsignals durch die Magnetfeldabtasteinrichtung diese Information über die Funkverbindung zwischen Targetstation und Basisstation an letztere insbesondere digital übermittelt und beispielsweise von der Steuereinrichtung in der Basisstation oder einer mit der Basisstation datenverbundene zentrale Steuereinrichtung zur Ermittlung des gesuchten Abstand verwendet werden, insbesondere durch eine entsprechende Berechnung. In einer speziellen Ausführungsform kann auch vorgesehen sein, den gesuchten Abstand in der Targetstation zu ermitteln und an die Basisstation mittels der beschriebenen Funkverbindung zu übertragen.

Für die Ausgestaltung der elektrischen Versorgungseinrichtung der Targetstation sind mehrere Ausführungsformen denkbar. Beispielsweise kann vorgesehen sein, dass eine Einrichtung zur Erzeugung von elektrischer Energie in der Targetstation vorgesehen ist, insbesondere unter Nutzung der Umgebungstemperatur der Targetstation, einer mechanischen Bewegung der Targetstation und/oder einer elektromagnetischen Strahlung im Bereich der Targetstation. Auf diese Weise kann im Wesentlichen auf verschleißfreie Art die elektrische Versorgung der Schaltungsanordnung autark in der Targetstation bereitgestellt werden. In einer weiteren Ausführungsform kann auch vorgesehen sein, in der Targetstation eine Batterie oder einen Akku vorzusehen.

Bei der Basisstation kann vorgesehen sein, dass sie mittels eines externen Anschlusses, beispielsweise durch Verbindung mit einer Lichtmaschine oder einer Batterie des Fahrzeuges versorgt wird. In einer anderen Ausführungsform kann auch in der Basisstation eine elektrische Versorgungsstation umfasst sein, wie sie für die Targetstation beschrieben ist, sodass eine externe Stromversorgung entfallen kann.

Um den erfindungsgemäßen Fahrhöhensensor in eine zentrale Steuerung des Fahrzeuges zu integrieren bzw. an diese anzuschließen, kann ferner vorgesehen sein, dass die Basisstation einen Steueranschluss zum Verbinden mit einer zentralen Steuereinrichtung aufweist. Diese Verbindung kann galvanisch, jedoch auch mittels einer Luftschnittstelle ausgeführt sein.

Eine größere Anpassungsfähigkeit des erfindungsgemäßen Fahrhöhensensors an die jeweiligen Gegebenheiten kann dadurch erreicht werden, dass zwischen Targetstation und Basisstation dadurch eine bidirektionale Kommunikation bereitgestellt wird, dass sowohl die Receivereinrichtung der Basisstation als auch die Transmittereinrichtung der Targetstation als Transceivereinrichtung ausgebildet sind, sodass in beide Richtungen Information ausgetauscht werden kann. Beispielsweise können auf diese Weise auch Einstellparameter von der Basisstation an die Targetstation insbesondere auch digital übermittelt werden soweit die Funkverbindung entsprechend konzipiert ist.

Auch bei unidirektionaler Kommunikation zwischen Targetstation und Basisstation können von der Targetstation neben der Abstandsinformation beispielsweise Betriebszustandsparameter an die Basisstation übermittelt werden.

Um die Teile der Basisstation und der Targetstation, d.h. die jeweiligen elektrischen Schaltungsanordnungen und deren Bauteile, vor äußerer Einwirkung zu schützen, kann vorgesehen sein, für beide Stationen jeweils ein geschlossenes Gehäuse vorzusehen. Je nach Anwendung kann das Gehäuse spritzwassergeschützt oder auch wasserdicht ausgebildet sein, insbesondere zum Beispiel durch Verguss. Um das zwischen den beiden Stationen vorliegende Magnetfeld bzw. die ausgetauschten elektromagnetischen Funksignale nicht zu stark zu schwächen, kann vorgesehen sein, dass das bzw. die Gehäuse ein die jeweiligen Felder nicht oder kaum abschwächenden Material umfassen bzw. daraus bestehen.

Um die Anordnung des erfindungsgemäßen Fahrhöhensensors zu erleichtern, kann zweckmäßigerweise vorgesehen sein, dass zur Befestigung der Basisstation am Aufbau des Fahrzeugs ein entsprechendes Befestigungsmittel sowie zur Befestigung der Targetstation an einer Fahrzeugachse des Fahrzeuges ein weiteres Befestigungsmittel vorgesehen ist. Insbesondere können in einer einfachen Ausgestaltung beide Befestigungsmittel als Blechhalter ausgebildet sein, welche durch Befestigungsmöglichkeiten wie Verschraubung, Klemmung, Klebung etc. an Aufbau bzw. Fahrzeugachse des Fahrzeuges befestigt werden können.

In einer besonderen Ausführungsform der Erfindung kann zum Schutz des erfindungsgemäßen Fahrhöhensensors auch vorgesehen sein, dass dieser sich komplett oder auch teilweise, beispielsweise die Targetstation, innerhalb eines zwischen dem Aufbau und einer Achse des Fahrzeugs angeordneten Aggregats wie einer Luftfeder platziert ist. Besonders vorteilhaft kann auch vorgesehen sein, beide Teile des erfindungsgemäßen Fahrhöhensensors, d.h. sowohl die Basisstation als auch die Targetstation innerhalb eines solchen Aggregats wie einer Luftfeder oder eines Schwingungsdämpfers etc. anzuordnen. Soweit das Aggregat eine Luftfeder ist, kann vorgesehen sein, die Basisstation mittels eines Befestigungsmittels an einer oberen Innenstirnseite des Luftfederaggregats und die Targetstation mittels eines weiteren Befestigungsmittels an einer weiteren, unteren Stirnseite des Luftfederaggregats anzubringen.

Die Erfindung wird im Folgenden durch das Beschreiben einiger Ausführungsformen unter Bezugnahme auf die beiliegenden Zeichnungen erläutert, wobei
- Figur 1: eine Überblicksprinzipskizze eines erfindungsgemäß ausgebildeten Fahrhöhensensors 1
- Figur 2: ein Blockschaltbild zur Angabe der Funktionsbauteile der Basisstation 10 des in Figur 1 angegebenen Fahrhöhensensors 1,
- Figur 3: ein Blockschaltbild zur Angabe der Funktionsbauteile der Targetstation 30 des in Figur 1 angegebenen Fahrhöhensensors 1,
- Figur 4: eine beispielhafte Befestigung des Fahrhöhensensors 1 gemäß Figur 1 am Aufbau bzw. an einem (Bau-) Teil einer Fahrzeugachse eines Fahrzeugs, und
- Figur 5: eine detailliertere Prinzipskizze unter Angabe mehreren Komponenten der Basisstation 10 und der Targetstation 30 des in Figur 1 angegebenen Fahrhöhensensors 1
zeigt.

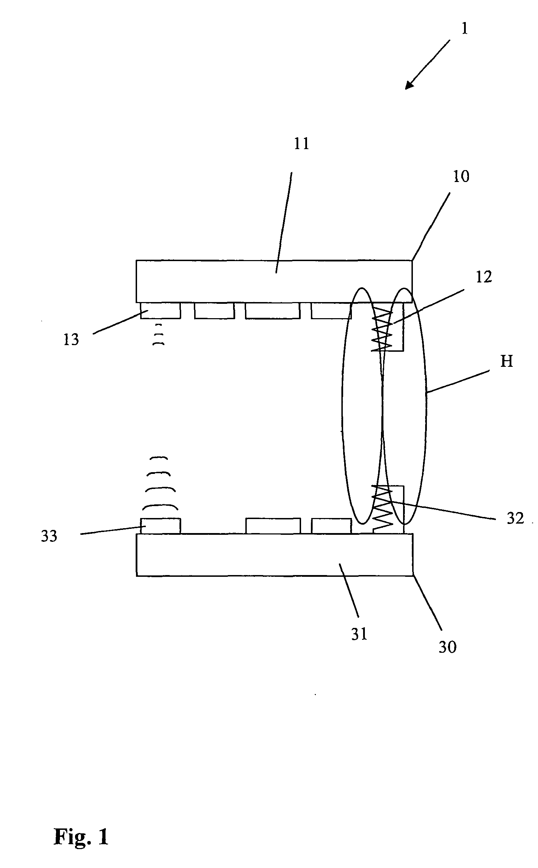

Der erfindungsgemäße Fahrhöhensensor 1 wird durch zwei im Fahrzeug örtlich voneinander beabstandete Teile, die Basisstation 10 sowie die Targetstation 30 gebildet, siehe Figur 1. Zur Klarheit der Darstellung sind die in der Figur jeweils in der Regel umfassten Gehäuse beider Teile nicht dargestellt. Die elektrischen Komponenten beider Stationen sind auf Grundplatinen 11, 31 angeordnet. Hierbei weist die Basisstation eine herkömmliche LF-Sendespule 12, wie sie auf dem RFID-Gebiet Verwendung findet, zur Erzeugung eines stationären magnetischen Wechselfeldes H in der Umgebung der Basisstation 10 auf. Diese beinhaltet notwendige Treibereinrichtungen, um über die LF-Sendespule 12 ein übliches, stationäres 125kHz-LF-Magnetfeld in der Umgebung der Basisstation 10 zu erzeugen. Dieses Magnetfeld wird von einer entsprechenden LF-Receiverspule 32 auf der Grundplatine 31 der Targetstation 30 erfasst bzw. abgetastet. Das sich mit einer Frequenz von 125kHz ändernde Magnetfeld H erzeugt in der Receiverspule 32 eine Induktionsspannung, welche ein Maß für die Feldstärke und damit für den Abstand der LF-Sendespule 12 von der Receiverspule 32 ist.

In der Figur ist der Magnetfeldverlauf angedeutet, dabei kommt der Ausgestaltung der LF-Sendespule 12 und auch der LF-Receiverspule 32 besondere Bedeutung zu. Diese sind derart optimal gestaltet, dass sich im Sensor-Arbeitsbereich ein maximales Magnetfeld mit minimaler Streuwirkung außerhalb dieses Arbeitsbereiches ergibt.

Das in der beschriebenen Weise in der Targetstation 30 ermittelte Abstandsmaß wird dann über eine zwischen Targetstation und Basisstation aufbaubare Funkverbindung an die Basisstation übermittelt. Hierzu weist in der beschriebenen Ausführungsform die Targetstation einen HF-Sender 33 sowie die Basisstation einen zugeordneten HF-Empfänger 13 auf. Weitere Details zur Gestaltung und Anordnung des HF-Senders 33 sowie des HF-Empfängers 13 in der beschriebenen Ausführungsform des erfindungsgemäß ausgebildeten Fahrhöhensensors werden untenstehend erläutert.

Die an die Basisstation übermittelte, vom Abstand zwischen LF-Sendespule 13 und LF-Empfängerspule 32 abhängige Information über das erfasste Magnetfeld kann je nach spezifischer Ausführungsform in der Basisstation weiterverarbeitet oder auch von dieser an eine zentrale Steuerung mittels einer weiteren Funkverbindung oder einer drahtgebundenen Kopplung weitergegeben werden.

In der beschriebenen Ausführungsform ist die Basisstation 30 in nicht dargestellter Weise an die elektrische Versorgung eines Fahrzeuges angeschlossen. Demgegenüber wird die elektronische Schaltung auf der Targetstation 30 durch eine Versorgungseinrichtung 40 mit Energie versorgt, die in der beschriebenen Ausführungsform eine Lithiumbatterie ist. Alternativ dazu kann die Versorgungseinrichtung 40 als elektrische Energie erzeugende Einrichtung ausgebildet sein, beispielsweise als VEH (Vibration Energy Harvester), d.h. als Schaltung, welche die Vibrationsbewegungen der Targetstation, hervorgerufen durch den Fahrbetrieb des Fahrzeuges, an welchem der Fahrhöhensensor angebracht ist, in elektrische Energie, beispielsweise über den elektromagnetischen Effekt, umgewandelt.

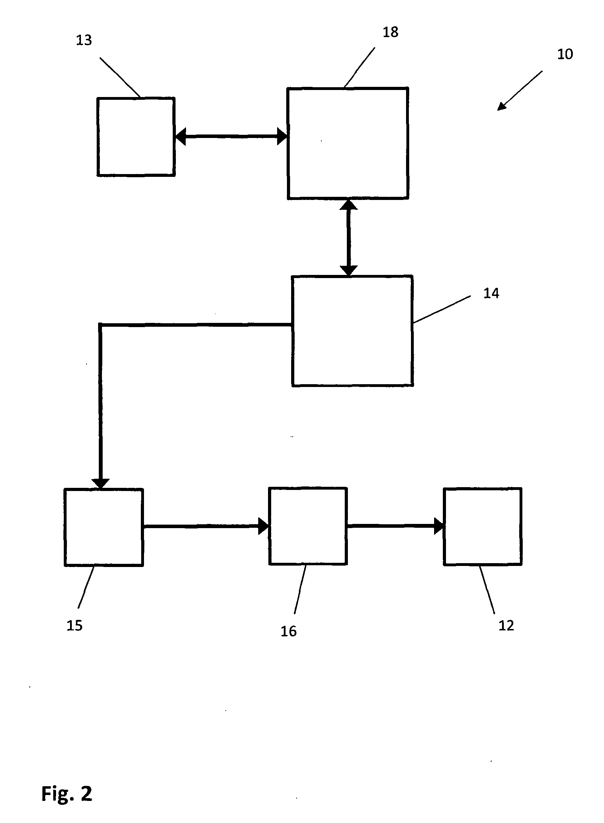

Ein Blockschaltbild der von der Basisstation 10 umfassten Funktionseinheiten zeigt Figur 2. Wie dargestellt, dient zur Steuerung ein Mikrocontroller 14, welcher die LF-Treiberstufe 15 digital ansteuert, die selbst die LF-Endstufe 16 analog zum Betreiben der LF-Sendespule 12 versorgt. Der Mikrocontroller 14 ist ferner zum Empfang von Daten der Targetstation mit einem HF-Receiver 18 datenverbunden, welcher die Empfangssignale der HF-Antenne 17 auswertet.

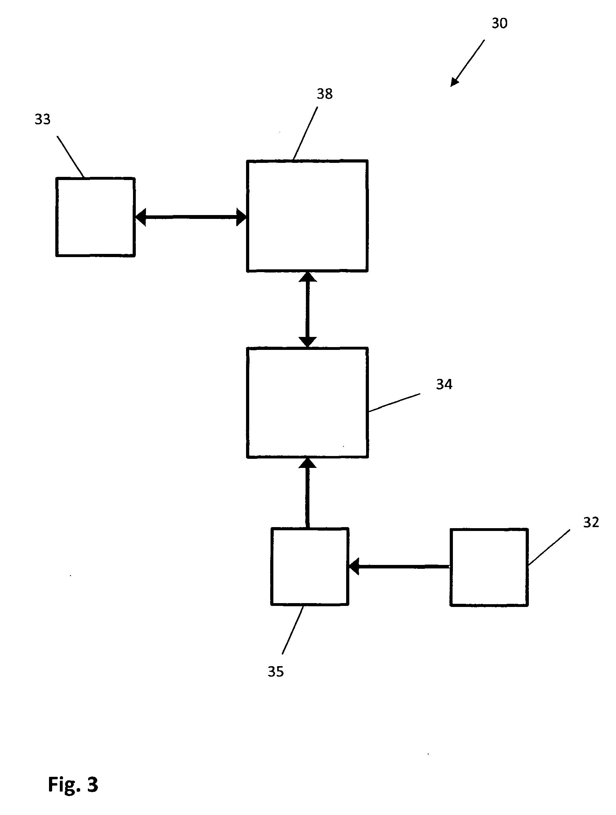

In ähnlicher Weise zeigt Figur 3 in einem Blockschaltbild die Funktionseinheiten der Targetstation 30. Diese umfasst einen Mikrocontroller 34, welche die von der Funktionseinrichtung Feldstärkemessung 35 ermittelte Information über die von der LF-Receiverspule 32 erfasste Magnetfeldstärke aufnimmt. Der Controller 34 steuert ferner einen HF-Transmitter 38 an, welcher die HF-Antenne 37 treibt zur Übermittlung von Information an die Basisstation betreffend das Ergebnis der Feldstärkemessung und damit der Beabstandung zwischen LF-Sende- und LF-Receiverspule.

In der beschriebenen Ausführungsform wird die an die Basisstation digital übermittelte Information weiterverarbeitet und zur Regelung in einem Nivelliersystem zum Beispiel zur Konstanthaltung einer Fahrhöhe unabhängig von der Ladung und/oder den Fahrbedingungen eines Fahrzeuges verwendet. Insofern ist der erfindungsgemäße Fahrhöhensensor zur Abgabe eines linearen Wegsignals an ein automatisches Niveau-Regulierungssystem ausgebildet.

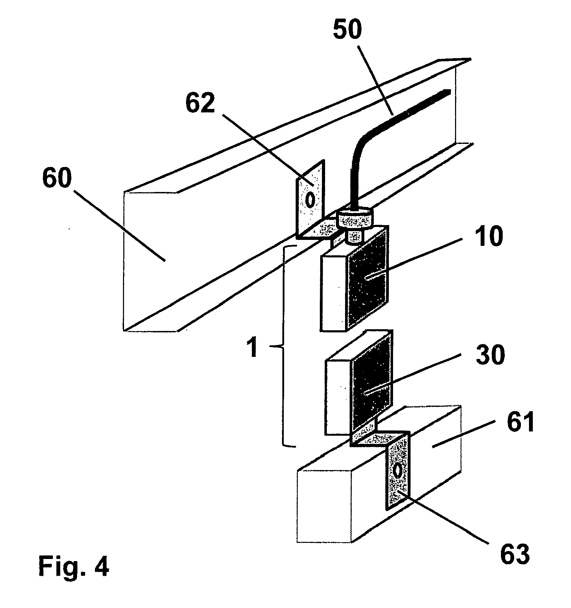

Eine beispielhafte Anordnung des erfindungsgemäßen, obenstehend beschriebenen Fahrhöhensensors 1 umfassend eine Basisstation 10 und eine zur Basisstation örtlich beabstandete Targetstation 30 zeigt Figur 4. Dabei ist die Targetstation 30 mittels einer Halterkonstruktion 63 an der Fahrzeugachse 61 befestigt, während die Basisstation 10 mittels einer Halterkonstruktion 62 am aufbauseitigen Abschnitt einer Luftfederanordnung, vorzugsweise am Fahrzeugaufbau 60 selbst, befestigt ist.

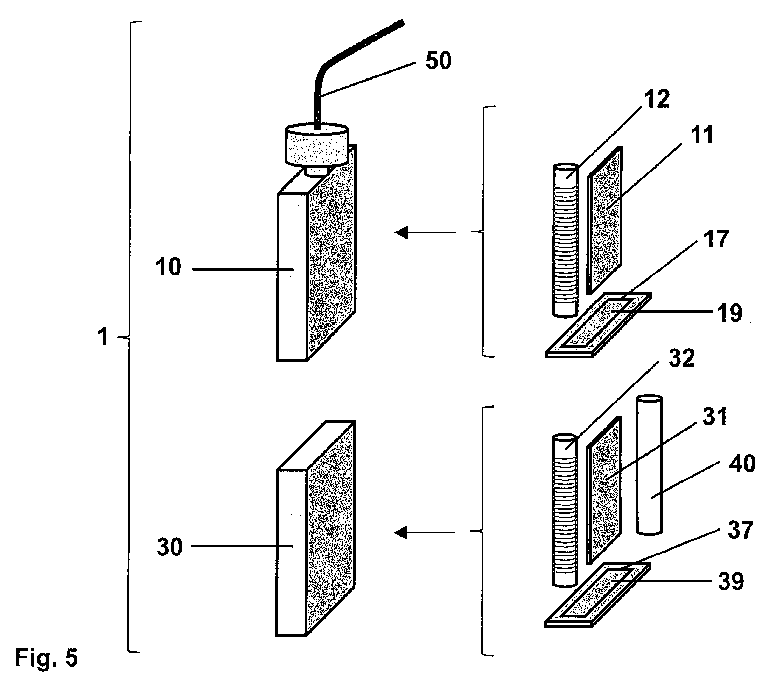

Weitere Details zur Gestaltung und Anordnung des HF-Senders 33 an der Targetstation sowie des HF-Empfängers 13 an der Basisstation des erfindungsgemäß ausgebildeten Fahrhöhensensors, siehe Fig. 1, sind in Fig. 5 angegeben. Der HF-Sender 33 umfasst einen HF-Transmitter 38 sowie eine zugeordnete HF-Antenne 37, siehe auch Fig. 3. Dabei ist die HF-Antenne 37 auf einer separaten, zweckmäßigerweise räumlich um 90° versetzt auf der Grundplatine 31 angeordneten HF-Platine 39 befestigt. In gleicher Weise umfasst der HF-Empfänger 13 der Basisstation in der beschriebenen Ausführungsform eine entsprechende HF-Antenne 17, die auf einer separaten, zweckmäßigerweise räumlich um 90° versetzt auf der Grundplatine 11 angeordneten zweiten HF-Platine 19 befestigt ist sowie einen zugeordneten HF-Receiver 18. In der beschriebenen Ausführungsform werden alle Einrichtungen der Basisstation bzw. der Targetstation jeweils von einem auf der Grundplatine 11 bzw. 31 der Basisstation bzw. der Targetstation angeordneten Mikrocontroller 14 bzw. 34 gesteuert.

In einer anderen Ausführungsform sind die separaten HF-Platinen 19, 39 mit den HF-Antennen 17, 37 nicht an den jeweiligen Grundplatinen befestigt, sondern direkt am jeweiligen Gehäuse der Basisstation bzw. der Targetstation. Eine Kopplung der Bauelemente der jeweiligen Grundplatine 11, 31 mit denen der jeweiligen HF-Platinen 19, 39 kann beispielsweise über entsprechende Drahtverbindungen erfolgen.

### Bezugszeichenliste

- 1: Fahrhöhensensor
- 10: Basisstation
- 11: Grundplatine der Basisstation
- 12: LF-Sendespule
- 13: HF-Empfänger
- 14: Mikrocontroller
- 15: LF-Treiberstufe
- 16: LF-Endstufe
- 17: HF-Antenne
- 18: HF-Receiver
- 19: HF-Platine
- 30: Targetstation
- 31: Grundplatine der Targetstation
- 32: LF-Receiverspule
- 33: HF-Sender
- 34: Mikrocontroller
- 35: Funktionseinrichtung Feldstärkemessung
- 37: HF-Antenne
- 38: HF-Transmitter
- 39: HF-Platine
- 40: Versorgungseinrichtung
- 50: Steueranschluss
- 60: Fahrzeugaufbau
- 61: Fahrzeugachse
- 62: Halterkonstruktion
- 63: Halterkonstruktion
- H: Magnetfeld

## Patentansprüche

1. Fahrhöhensensor (1) zur Erfassung eines Abstandes in Fahrwerksystemen im Bereich zwischen einer Achse und einem Aufbau eines Fahrzeuges umfassend
- eine Basisstation (10), welche eine mit elektrischer Energie versorgbare elektrische Schaltungsanordnung mit zumindest einer Steuereinrichtung sowie einer Magnetfelderzeugungseinrichtung aufweist;
- eine örtlich zur Basisstation beabstandet platzierbare Targetstation (30), welche eine, von einer Versorgungseinrichtung gespeiste elektrische Schaltungsanordnung umfasst, die eine Steuereinrichtung aufweist, **dadurch gekennzeichnet, dass** die Targetstation (30) eine Magnetfeldabtasteinrichtung aufweist, welche dazu ausgebildet ist die Feldstärke des von der Magnetfelderzeugungseinrichtung der Basisstation erzeugten Magnetfeldes zu erfassen, und ferner eine Transmittereinrichtung (38) aufweist, die dazu ausgebildet ist Funksignale zur digitalen Datenübertragung an die Basisstation auswenden, wobei die Basisstation (10) eine Receivereinrichtung (18) aufweist, welche dazu ausgebildet ist die Funksignale zur digitalen Datenübertragung zu empfangen, und wobei die Funksignale digitale Information über das erfasste Magnetfeld, umfassend die Magnetfeldstärke tragen, welche Rückschlüsse auf die Entfernung zwischen Magnetfelderzeugungseinrichtung der Basiseinrichtung (10) und Magnetfeldabtasteinrichtung der Targetstation (30) erlaubt.

2. Fahrhöhensensor (1) nach Anspruch 1, **dadurch gekennzeichnet, dass** die Magnetfelderzeugungseinrichtung der Basisstation (10) eine Wechselstrom-gespeiste Sendespuleneinrichtung, insbesondere eine LF-Sendespuleneinrichtung (12) und die Magnetfeldabtasteinrichtung der Targetstation (30) eine Receiverspuleneinrichtung, insbesondere eine LF-Receiverspuleneinrichtung (32), umfasst.

3. Fahrhöhensensor (1) nach Anspruch 1 oder 2, **dadurch gekennzeichnet, dass** die Transmittereinrichtung der Targetstation (30) eine Radio- oder Mikrowellen-Transmittereinrichtung (38) mit ausgangsseitig angeschlossener Sendeantenne (37) und die Receivereinrichtung (18) der Basisstation (10) eine Radio- oder Mikrowellen-Receivereinrichtung mit eingangsseitig angeschlossener Empfangsantenne umfasst.

4. Fahrhöhensensor (1) nach Anspruch 1, 2 oder 3, **dadurch gekennzeichnet, dass** die Basisstation einen Ultraschallsender zur Abgabe eines Ultraschallsignals und die Targetstation einen Ultraschallsensor zur Erfassung eines, von dem Ultraschallsender der Basisstation gesendeten Ultraschallsignals aufweist, wobei die Magnetfelderzeugungseinrichtung und der Ultraschallsender zum zeitlich aufeinander abgestimmten Erzeugen eines Magnetfeldes bzw. eines Ultraschallsignals ansteuerbar sind, insbesondere durch die Steuereinrichtung der Basisstation.

5. Fahrhöhensensor (1) nach Anspruch 4, **dadurch gekennzeichnet, dass** die Steuereinrichtung der Targetstation zur Ermittlung einer Information über das Zeitmaß für den zeitversetzten Empfang des Ultraschallsignals durch den Ultraschallempfänger und des Magnetfeldsignals durch die Magnetfeldabtasteinrichtung eingerichtet ist.

6. Fahrhöhensensor (1) nach Anspruch 5, **dadurch gekennzeichnet, dass** Information über das Zeitmaß für den zeitversetzten Empfang des Ultraschallsignals am Ultraschallempfänger und des Magnetfeldsignals an der Magnetfeldabtasteinrichtung über die Transmittereinrichtung der Targeteinrichtung an die Receivereinrichtung der Basisstation funkübertragbar ist.

7. Fahrhöhensensor (1) nach einem der Ansprüche 1 bis 6, **dadurch gekennzeichnet, dass** die elektrische Versorgungseinrichtung (40) der Targetstation (30) eine Lithiumbatterie ist.

8. Fahrhöhensensor (1) nach einem der Ansprüche 1 bis 7, **dadurch gekennzeichnet, dass** die elektrische Versorgungseinrichtung (40) der Targetstation (30) eine Einrichtung zur Nutzbarmachung von Energie aus der Umgebung und zur Umformung dieser Energie in elektrisch verwertbare Energie umfasst, insbesondere unter Nutzung einer Umgebungstemperatur der Targetstation, einer mechanischen Bewegung der Targetstation und/oder einer elektromagnetischen Strahlung im Bereich der Targetstation.

9. Fahrhöhensensor (1) nach einem der Ansprüche 1 bis 8, **dadurch gekennzeichnet, dass** die Basisstation (10) einen Steueranschluss zum galvanischen Verbinden mit einer zentralen Steuereinrichtung aufweist.

10. Fahrhöhensensor (1) nach einem der Ansprüche 1 bis 9, **dadurch gekennzeichnet, dass** zur bidirektionalen Kommunikation zwischen Targetstation (30) und Basisstation (10) die Receivereinrichtung der Basisstation und die Transmittereinrichtung der Targetstation jeweils als Transceivereinrichtung ausgebildet sind.

11. Fahrhöhensensor (1) nach einem der Ansprüche 1 bis 10, **dadurch gekennzeichnet, dass** die Steuereinrichtung der Basisstation (10) zur Ermittlung einer Fahrzeughöhe auf der Grundlage der von der Targetstation (30) an die Basisstation übertragene Information eingerichtet ist.

12. Fahrhöhensensor (1) nach einem der Ansprüche 1 bis 11, **dadurch gekennzeichnet, dass** die Basisstation (10) und die Targetstation (20) jeweils ein geschlossenes oder vergossenes Gehäuse aufweisen.

13. Fahrhöhensensor (1) nach einem der Ansprüche 1 bis 12, **dadurch gekennzeichnet, dass** ein Befestigungsmittel zur Befestigung der Basisstation (10) an einem zwischen einem Aufbau und einer Achse des Fahrzeuges angeordnetem Aggregat wie einer Luftfeder oder an dem Aufbau des Fahrzeuges sowie ein Befestigungsmittel zur Befestigung der Targetstation (30) an einer Fahrzeugachse des Fahrzeuges vorgesehen ist.

14. Fahrhöhensensor (1) nach einem der Ansprüche 1 bis 13, **dadurch gekennzeichnet, dass** der Fahrhöhensensor (1) zur Anordnung innerhalb eines zwischen einem Aufbau und einer Achse des Fahrzeuges angeordnetem Aggregat wie einer Luftfeder ausgebildet ist, wobei die Basisstation (10) ein Befestigungsmittel zur Befestigung an einer oberen Innenstirnseite des Aggregats und die Targetstation (30) ein Befestigungsmittel zur Befestigung an einer weiteren, unteren Innenstirnseite des Aggregats aufweist.

## Claims

1. Ride height sensor (1) for detecting a distance in chassis systems in the region between an axis and a body of a vehicle, comprising
- a base station (10) including an electric circuit arrangement which can be supplied with electric energy and which includes at least one control device as well as a magnetic field generating device;
- a target station (30) which can be placed in a manner locally spaced with respect to the base station and which includes an electric circuit arrangement electrically supplied from a supply device and having a control device,
***characterized* in that** the target station (30) includes a magnetic field sensing device adapted for detecting the magnetic field strength of the magnetic field generated by the magnetic field generating device of the base station and further includes a transmitter device (38) which is adapted for emitting radio signals for digital data transmission to the base station, wherein the base station (10) includes a receiver device (18) which is adapted for receiving the radio signals for digital data transmission and wherein the radio signals carry digital information on the detected magnetic field including the magnetic field strength, which allows to draw inferences about the distance between the magnetic field generating device of the base station (10) and the magnetic field sensing device of the target station (30).

2. Ride height sensor (1) according to claim 1, **characterized in that** the magnetic field generating device of the base station (10) includes an AC-supplied transmitter coil device, particularly an LF transmitter coil device (12), and the magnetic field sensing device of the target station (30) includes a receiver coil device, particularly an LF receiver coil device (32).

3. Ride height sensor (1) according to claim 1 or 2, **characterized in that** the transmitter device of the target station (30) includes a radio or microwave transmitter device (38) with a transmitting antenna (37) connected on the output side, and the receiver device (18) of the base station (10) includes a radio or microwave receiver device with a receiving antenna connected on the input side.

4. Ride height sensor (1) according to claim 1, 2 or 3, **characterized in that** the base station includes an ultrasonic transmitter for outputting an ultrasonic signal and the target station includes an ultrasonic sensor for the detection of an ultrasonic signal transmitted from the ultrasonic transmitter of the base station, wherein the magnetic field generating device and the ultrasonic transmitter can be controlled for generating a magnetic field or an ultrasonic signal in a time-coordinated manner, particularly by the control device of the base station.

5. Ride height sensor (1) according to claim 4, **characterized in that** the control device of the target station is configured for obtaining information about the time for the time-shifted receipt of the ultrasonic signal by the ultrasonic receiver and of the magnetic field signal by the magnetic field sensor.

6. Ride height sensor (1) according to claim 5, **characterized in that** the information about the time for the time-shifted receipt of the ultrasonic signal at the ultrasonic receiver and of the magnetic field signal at the magnetic field sensor can be radio-transmitted to the receiver device of the base station via the transmitter device of the target device.

7. Ride height sensor (1) according to one of the claims 1 to 6, **characterized in that** the electrical supply device (40) of the target station (30) is a lithium battery.

8. Ride height sensor (1) according to one of the claims 1 to 7, **characterized in that** the electrical supply device (40) of the target station (30) is a device for exploiting energy from the surroundings and for the conversion of that energy in electrically usable energy, particularly under utilization of an ambient temperature of the target station, a mechanical movement of the target station and/or an electromagnetic radiation in the region of the target station.

9. Ride height sensor (1) according to one of the claims 1 to 8, **characterized in that** the base station (10) includes a control terminal for the galvanic connection to a central controller.

10. Ride height sensor (1) according to one of the claims 1 to 9, **characterized in that** for the bidirectional communication between the target station (30) and the base station (10), the receiver device of the base station and the transmitter device of the target station are each configured as a transceiver device.

11. Ride height sensor (1) according to one of the claims 1 to 10, **characterized in that** the control device of the base station (10) is configured for detecting a vehicle height on the basis of the information transmitted from the target station (30) to the base station.

12. Ride height sensor (1) according to one of the claims 1 to 11, **characterized in that** the base station (10) and the target station (20) each comprise a sealed or molded housing.

13. Ride height sensor (1) according to one of the claims 1 to 12, **characterized in that** there are provided a fixing means for fixing the base station (10) to a unit such as an air spring disposed between a body and an axis of the vehicle or to the body of the vehicle, and a fixing means for fixing the target station (30) to an axis of the vehicle.

14. Ride height sensor (1) according to one of the claims 1 to 13, **characterized in that** the ride height sensor (1) is designed for the arrangement within a unit such as an air spring disposed between a body and axis of the vehicle, wherein the base station (10) has a fixing means for fixing to un upper inner front side of the unit, and the target station (30) has a fixing means for fixing to a further, lower inner front side of the unit.

## Revendications

1. Capteur d'hauteur de conduite (1) pour la détection d'une distance dans un système de châssis dans la zone entre un axe et une carrosserie d'un véhicule, comprenant
- une station de base (10) muni d'un arrangement de circuit électrique qui peut être alimenté en énergie électrique, avec au moins un dispositif de commande ainsi qu'un dispositif de génération d'un champ magnétique;
- une station cible (30) susceptible d'être localement placée à une distance de la station de base et comprenant un arrangement de circuit électrique alimenté d'un dispositif d'alimentation et comprenant un dispositif de commande,
**caractérisé en ce que** la station cible (30) comporte un dispositif de balayage de champs magnétique qui est conçu pour détecter l'intensité de champ du champ magnétique généré par un dispositif de génération d'un champ magnétique de la station de base, et en outre un dispositif transmetteur (38) qui est conçu pour émettre des signaux de radio pour la transmission digitale des données vers la station de base, la station de base (10) comportant un dispositif récepteur (18) qui est conçu pour recevoir les signaux de radio pour la transmission digitale des donnes et les signaux de radio portant des informations sur le champ magnétique détecté incluant l'intensité du champ magnétique qui permet de tirer des conclusions sur la distance entre le dispositif de génération de champ magnétique de la station de base (10) et le dispositif de balayage de champ magnétique de la station de base (10).

2. Capteur d'hauteur de conduite (1) selon la revendication 1, **caractérisé en ce que** le dispositif de génération de champ magnétique de la station de base (10) comporte un dispositif de bobine émettrice alimenté en un courant alternatif, notamment un dispositif de bobine émettrice LF (12), et le dispositif de balayage de champ magnétique de la station cible (30) comporte un dispositif de bobine réceptrice, notamment un dispositif de bobine réceptrice LF (32).

3. Capteur d'hauteur de conduite (1) selon la revendication 1 ou 2, **caractérisé en ce que** le dispositif transmetteur de la station cible (30) comprend un dispositif de réception des ondes radio ou des micro-ondes (38) avec une antenne d'émission (37) connectée côté sortie et le dispositif récepteur (18) de la station de base (10) comporte un dispositif de réception des ondes radio ou des micro-ondes avec une antenne réceptrice connectée côté entrée.

4. Capteur d'hauteur de conduite (1) selon la revendication 1, 2 ou 3, **caractérisé en ce que** la station de base comporte un émetteur à ultrasons pour l'émission d'un signal ultrasonore et la station cible comporte un capteur à ultrasons pour la détection d'un signal ultrasonore émis par l'émetteur à ultrasons, le dispositif de génération de champ magnétique et l'émetteur à ultrasons pouvant être commandés pour la génération d'un champ magnétique ou d'un signal ultrasonore de manière successive dans le temps et harmonisée, notamment par le dispositif de commande de la station de base.

5. Capteur d'hauteur de conduite (1) selon la revendication 4, **caractérisé en ce que** le dispositif de commande de la station cible est configuré pour obtenir une information sur la mesure de temps pour la réception décalée du signal ultrasonore par le récepteur d'ultrasons et du signal de champ magnétique par le dispositif de balayage de champ magnétique.

6. Capteur d'hauteur de conduite (1) selon la revendication 5, **caractérisé en ce que** l'information sur la mesure de temps pour la réception décalée du signal ultrasonore au récepteur d'ultrasons et du signal de champ magnétique au dispositif de balayage de champ magnétique peut être transmise par radio au dispositif récepteur de la station de base, via le dispositif transmetteur du dispositif cible.

7. Capteur d'hauteur de conduite (1) selon l'une des revendications 1 à 6, **caractérisé en ce que** le dispositif d'alimentation électrique (40) de la station cible (30) et une batterie en lithium.

8. Capteur d'hauteur de conduite (1) selon l'une des revendications 1 à 7, **caractérisé en ce que** le dispositif d'alimentation électrique (40) de la station cible (30) et un dispositif pour l'exploitation d'énergie de l'environnement et pour la conversion de cet énergie en énergie exploitable de manière électrique, notamment sous l'utilisation d'une température ambiante de la station cible, d'un mouvement mécanique de la station cible et/ou d'un rayonnement électromagnétique dans la région de la station cible.

9. Capteur d'hauteur de conduite (1) selon l'une des revendications 1 à 8, **caractérisé en ce que** la station de base (10) comporte une connexion de commande pour la connexion galvanique avec un dispositif central de commande.

10. Capteur d'hauteur de conduite (1) selon l'une des revendications 1 à 9, **caractérisé en ce que** pour la communication bidirectionnelle entre la station cible (30) et la station de base (10), ledit dispositif récepteur de la station de base et ledit dispositif transmetteur de la station cible sont configurés comme un dispositif émetteur-récepteur.

11. Capteur d'hauteur de conduite (1) selon l'une des revendications 1 à 10, **caractérisé en ce que** le dispositif de commande de la station de base (10) est agencé pour détecter un hauteur d'un véhicule á base de l'information transmise de la station cible (30) à la station de base.

12. Capteur d'hauteur de conduite (1) selon l'une des revendications 1 à 11, **caractérisé en ce que** la station de base (10) et la station cible (20) chacune comporte un boîtier fermé ou scellé.

13. Capteur d'hauteur de conduite (1) selon l'une des revendications 1 à 12, **caractérisé en ce qu'**est prévu un moyen de fixation pour la fixation de la station de base (10) à un ensemble tel qu'un ressort pneumatique disposé entre une carrosserie et un axe du véhicule ou à la carrosserie ainsi qu'un moyen de fixation pour la fixation de la station cible (30) à un axe de véhicule.

14. Capteur d'hauteur de conduite (1) selon l'une des revendications 1 à 13, **caractérisé en ce que** ledit capteur d'hauteur de conduite (1) est configuré pour l'arrangement à l'intérieur d'un ensemble tel qu'un ressort pneumatique entre une carrosserie et un axe de véhicule, la station de base (10) comportant un moyen de fixation pour la fixation à une face intérieure supérieure de l'ensemble, et la station cible (30) comportant un moyen de fixation pour la fixation à une autre face intérieure inférieure de l'ensemble.
